# EUROPÄISCHE PATENTANMELDUNG

(11) **EP 0 655 590 A1**
(43) Veröffentlichungstag der Anmeldung: **31.05.1995**
(21) Anmeldenummer: 94118256.0
(22) Anmeldetag: 19.11.1994
(51) Int. Cl.: F25B 49/02, F24D 19/10, G05D 23/19

(54) **Kompressions-Wärmepumpe und Verfahren zu ihrem Betreiben**

(30) Priorität: 23.11.1993 DE 4339880
(71) Anmelder: KKW Kulmbacher Klimageräte-Werk GmbH, D-95326 Kulmbach (DE)
(72) Erfinder: Rodecker, Artur, D-95326 Kulmbach (DE); Zaugg, Johannes, D-96472 Rödental (DE)
(74) Vertreter: Hosbach, Hans Ulrich

(57) **Zusammenfassung**

Die für Heizzwecke vorgesehene Wärmepumpe umfaßt einen Kompressor, einen Kondensator, eine Drossel und einen unter der Einwirkung der Außentemperatur arbeitenden Verdampfer. Der Kompressor wird von einem Asynchronmotor angetrieben, welcher in seiner Drehzahl steuerbar ist, um im drehzahlsteuerbaren Bereich die Heizleistung der Wärmepumpe an den Wärmebedarf der Heizung anzupassen. Dadurch reduziert sich die bei niedrigen Außentemperaturen sonst erforderliche Zusatz-Heizleistung. Ferner beginnt bei höheren Außentemperaturen der Taktbetrieb auf einem niedrigeren Leistungsniveau. Eine entsprechende Steigerung der Leistungszahl ist die Folge.

## Beschreibung

Die Erfindung betrifft ein Verfahren zum Betreiben einer Kompressions-Wärmepumpe für Heizzwecke, die einen Kompressor, einen Kondensator, eine Drossel und einen unter der Einwirkung der Außentemperatur arbeitenden Verdampfer umfaßt. Ferner betrifft die Erfindung eine derartige Kompressions-Wärmepumpe.

Heizungen haben naturgemäß einen Wärmebedarf, der mit sinkender Außentemperatur ansteigt. Die Charakteristik von Wärmepumpen hingegen ist gegenläufig, d.h. ihre Heizleistung nimmt mit sinkende Außentemperatur ab.

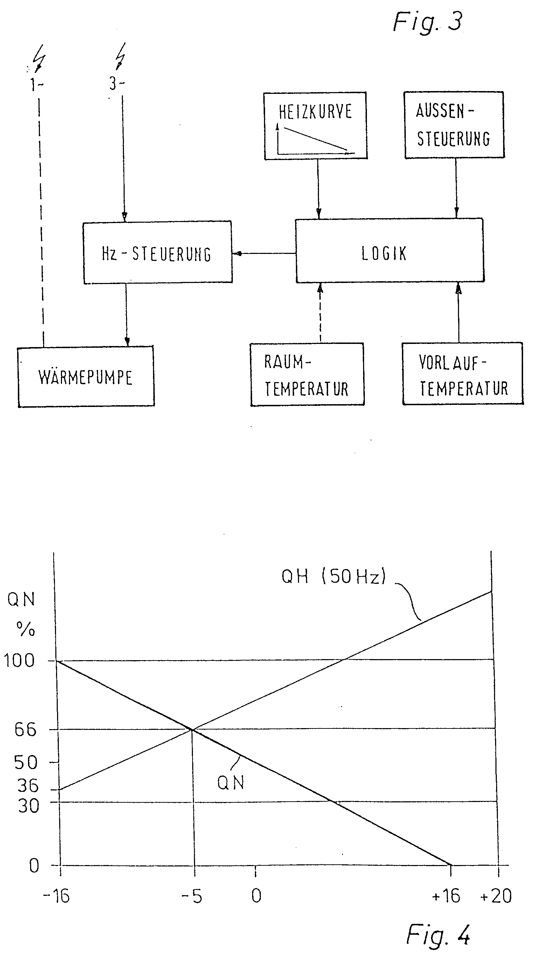

Diese Verhältnisse sind in Fig. 4 der beiliegenden Zeichnungen dargestellt. Fig. 4 zeigt eine typische Heizkurve, nämlich den Wärmebedarf QN, aufgetragen über der Außentemperatur. Eingezeichnet in das Diagramm ist ferner die Heizleistung QH einer Kompressions-Wärmepumpe. Es handelt sich um eine Standard-Wärmepumpe, die von einem Asynchronmotor mit einer konstanten Drehzahl von 50 Hz angetrieben wird. Bei einer Außentemperatur von -16°C deckt die Wärmepumpe ca. 36% des bei dieser Temperatur erforderlichen Wärmebedarfs der Heizung. Das Defizit muß von einer Zusatzheizung geliefert werden. Der optimale Betriebspunkt liegt bei einer Außentemperatur von -5°C, da hier die Wärmepumpe im Dauerbetrieb den gesamten Wärmebedarf zu liefern vermag. Im Bereich höherer Außentemperatur übersteigt die Heizleistung der Wärmepumpe den Wärmebedarf, d.h. die Wärmepumpe muß getaktet werden, wobei sie entsprechend unwirtschaftlich arbeitet. Will man diesen unwirtschaftlichen Arbeitsbereich einschränken, so muß die Wärmepumpe kleiner dimensioniert werden, wodurch der Schnittpunkt der beiden Kennlinien auf der Kennlinie des Wärmebedarfs nach unten wandert und sich zu höheren Außentemperaturen hin verschiebt. Zwangsläufig steigt dadurch der Bedarf an Zusatzheizung im niedrigeren Temperaturbereich an. Will man umgekehrt den Bedarf an Zusatzheizung vermindern, so muß man dafür in kauf nehmen, daß der Bereich des unwirtschaftlichen Taktbetriebes der Wärmepumpe größer wird und sich zu größeren Leistungen hin verschiebt. Das Diagramm stellt eine optimierte Auslegung der Wärmepumpe in Anpassung an die Heizkurve dar und repräsentiert den Stand der Technik.

Der Erfindung liegt die Aufgabe zugrunde, die Heizleistung der Wärmepumpe noch besser an den Wärmebedarf der Heizung anzupassen.

Zur Lösung dieser Aufgabe ist das Verfahren nach der Erfindung dadurch gekennzeichnet, daß die Drehzahl des Kompressors in Abhängigkeit von der Außentemperatur derart gesteuert wird, daß die Heizleistung der Wärmepumpe im drehzahlgesteuerten Bereich mindestens näherungsweise dem von der Außentemperatur abhängigen Heiz-Wärmebedarf entspricht.

Bei niedrigen Temperaturen arbeitet die Wärmepumpe mit ihrer maximalen Drehzahl. Diese kann je nach den Gegebenheiten so gewählt werden, daß die Wärmepumpe alleine 100% des Wärmebedarfs der Heizung deckt. Steigt die Außentemperatur an, so vermindert sich die Drehzahl der Wärmepumpe, so daß deren Heizleistung mindestens näherungsweise der Heizkurve folgt und auf dieser nach unten wandert. Die niedrigste zulässige Drehzahl wird durch die Konstruktion des Kompressors vorgegeben. Von diesem Punkt an arbeitet die Wärmepumpe mit konstanter Drehzahl im Taktbetrieb. Allerdings liegt der Punkt weit unten auf der Heizkurve, d.h., bei relativ hoher Außentemperatur, so daß der Bereich des Taktbetriebes klein ist und bei niedriger Leistung liegt. Insgesamt ergibt sich eine erhebliche Verbesserung der Leistungszahl.

Eine bevorzugte Durchführung des Verfahrens besteht darin, daß die Heizkurve (Heiz-Wärmebedarf) erstellt wird, die Außen- und ggf. die Raumtemperatur erfaßt werden, aus der Außen- und ggf. der Raumtemperatur die benötigte Vorlauftemperatur der Heizung ermittelt wird und die ermittelte Vorlauftemperatur durch Drehzahlregelung des Kompressors eingestellt wird.

Grundsätzlich läßt sich die Erfindung auf beliebig angetriebene Kompressions-Wärmepumpen anwenden, bevorzugt allerdings auf Elektro-Wärmepumpen, bei denen der Kompressor von einem Asynchronmotor angetrieben wird. Die Drehzahl dieses Motors wird vorzugsweise zwischen 20 und 70 Hz gesteuert.

Die erfindungsgemäße Kompressions-Wärmepumpe für Heizzwecke, die einen Kompressor, einen Kondensator, eine Drossel und einen Verdampfer unfaßt, ist zur Lösung der gestellten Aufgaben dadurch gekennzeichnet, daß der Kompressor in seiner Drehzahl steuerbar ist.

Die Drehzahlsteuerbarkeit des Kompressors bietet die Möglichkeit für eine Weiterbildung der Erfindung, dergestalt, daß der Kompressor überdimensioniert ist. Anhand von Fig. 4 wurde erläutert, daß sich dadurch die Kennlinie der Heizleistung nach oben verschiebt, und zwar mit der Folge, daß der Taktbetrieb der Wärmepumpe bereits bei einer niedrigeren Außentemperatur einsetzt. Hieran ändert sich auch durch die Drehzahlsteuerung des Kompressors nichts. Allerdings bewirkt die Drehzahlsteuerung, daß die Verschiebung des Taktbetrieb-Punktes im unteren Bereich der Heizkurve stattfindet, also bei relativ geringem Wärmebedarf und relativ geringer Heizleistung. Eine Einbuße an Wirtschaftlichkeit in diesem Bereich beeinflußt den Gesamt-Arbeitszahl nur unwesentlich.

Die Möglichkeit der Überdimensionierung des Kompressors ist insbesondere dort von Bedeutung, wo die Drehzahl des Kompressors nur begrenzt steuerbar ist.

Dies gilt u.a. auch für Elektro-Wärmepumpen, auf die die Erfindung, wie erwähnt, bevorzugt anwendbar ist. Um hier den Steuerbereich zu vergrößern, wird in Weiterbildung der Erfindung vorgeschlagen, einen Asynchronmotor einzusetzen, der durch Polzu- bzw. -abschaltung von Polpaaren mehrstufig betreibbar und in jeder Stufe in seiner Drehzahl steuerbar ist, und zwar vorzugsweise jeweils zwischen 20 und 70 Hz.

Vorteilhafterweise ist ein Drehzahlsteuergerät mit vorgeschalteter Logik vorgesehen, die an einen Vorlauf-Temperaturfühler und ggf. an einen Raum-Temperaturfühler angeschlossen ist sowie gespeichert die Heizkurve (Heiz-Wärmebedarf) enthält.

Als erfindungswesentlich offenbart gelten auch solche Kombinationen der erfindungsgemäßen Merkmale, die von den vorstehend diskutierten Verknüpfungen abweichen.

Die Erfindung wird im folgenden anhand bevorzugter Ausführungsbeispiele im Zusammenhang mit der beiliegenden Zeichnung näher erläutert. Die Zeichnung zeigt in:
- Fig. 1: ein Diagramm einer ersten Ausführungsform in einer Darstellung entsprechend Fig. 4;
- Fig. 2: ein Diagramm einer zweiten Ausführungsform, ebenfalls in einer Darstellung entsprechend Fig. 4;
- Fig. 3: ein Blockschaltbild der Wärmepumpenregelung;
- Fig. 4: den bereits erläuterten Stand der Technik.

Die nähere Erläuterung der Erfindung erfolgt anhand einer Elektro-Wärmepumpe, auf die die Erfindung bevorzugt Anwendung findet. Der Kompressor der Wärmepumpe, bei der es sich um eine Luft/Wasser-Wärmepumpe handelt, wird von einem Asynchronmotor angetrieben.

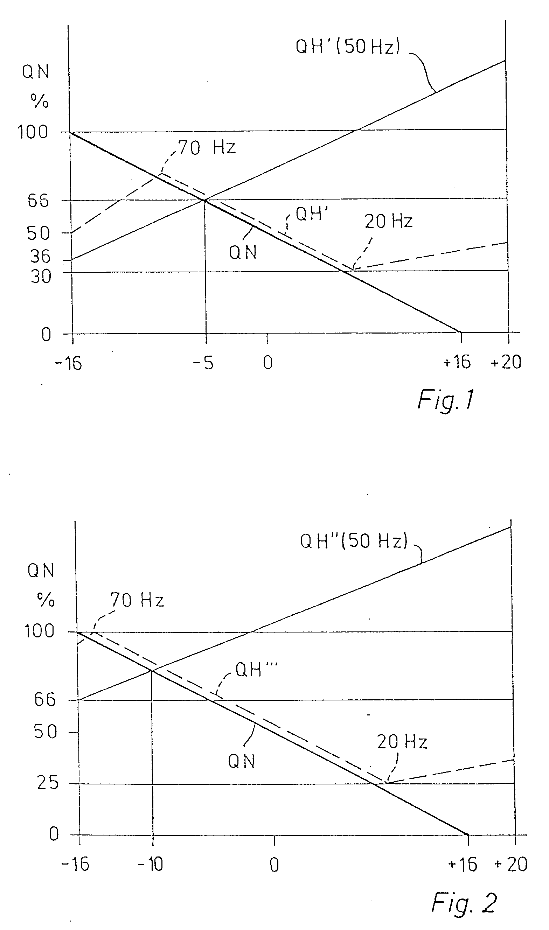

Fig. 1 entspricht in ihrer Darstellung der bereits erläuterten Fig. 4. Die Kennlinie QN stellt die Heizkurve dar und repräsentiert somit den Wärmebedarf der Heizung. Gleichermaßen gibt die Kennlinie QH die Heizleistung einer Standard-Wärmepumpe wieder, die mit konstanter Drehzahl von 50 Hz arbeitet. Die gestrichelt eingetragene Kennlinie QH' zeigt die Heizleistung einer erfindungsgemäßen Wärmepumpe, deren Kompressor mit der der Standard-Wärmepumpe übereinstimmt, jedoch mit steuerbarer Drehzahl betrieben wird.

Bei einer Außentemperatur von -16°C deckt die erfindungsgemäße Wärmepumpe ca. 50% des Wärmebedarfs der Heizung und übersteigt damit die Heizleistung der Standard-Wärmepumpe um ca. 40%. Sobald die Außentemperatur über -7°C steigt, vermag die erfindungsgemäße Wärmepumpe den Wärmebedarf voll zu decken. Von hier ab beginnt die Drehzahlreduzierung des Asynchronmotors. Dieses setzt sich fort bis ca. +4°C Außentemperatur, wobei die Heizleistung auf ca. 40% sinkt, bezogen auf die der mit konstanter Drehzahl laufenden Standard-Wärmepumpe. Gegenüber dieser erfolgt also der anschließende Taktbetrieb auf einem um 60% reduzierten Leistungsniveau, d.h., mit entsprechend verbessertem Wirkungsgrad.

Das Diagramm nach Fig. 2 repräsentiert eine erfindungsgemäße Wärmepumpe, deren Kompressor überdimensioniert ist und deren Asynchronmotor durch Polzu- bzw. -abschaltung zweistufig betrieben wird. Die Heizkurve QN entspricht denen nach den Fig. 1 und 4.

Die Kennlinie der Heizleistung QH'' gilt für einen Standardbetrieb mit einer konstanten Drehzahl von 50 Hz. Durch die Überdimensionierung des Kompressors liegt diese Kennlinie wesentlich höher. Sie deckt bei -16°C bereits ca. 66% des Wärmebedarfs der Heizung und kann diesen schon bei -10°C voll befriedigen. Bei konstanter Drehzahl würde allerdings auch bereits auf diesem hohen Leistungsniveau der Taktbetrieb einsetzen.

Den Betrieb mit Drehzahlregelung gibt die Kennlinie QH''' wieder. Bei einer Drehzahl von 70 Hz ist fast keine Zusatzheizung erforderlich. Bereits bei einer Außentemperatur von ca. - 15°C deckt die Wärmepumpe den gesamten Wärmebedarf der Heizung. Ihre Leistung liegt hier bei ca. 210%, bezogen auf die mit einer Drehzahl von 50 Hz betriebene Standard-Wärmepumpe nach den Figuren 1 und 4. Gegenüber dieser Bezugsgröße sinkt die Leistung der Wärmepumpe bei einer Drehzahl von 20 Hz auf 30%, so daß also der Taktbetrieb auf einem Leistungsniveau beginnt, das gegenüber Fig. 1 noch günstiger ist.

Die zweistufige Steuerung des Asynchronmotors wirkt sich folgendermaßen aus, wobei die Prozentzahlen wiederum auf die mit einer konstanten Drehzahl von 50 Hz arbeitende Standard-Wärmepumpe bezogen sind:
1.Stufe
   20 Hz - 30%
   50 Hz - 75%
   70 Hz - 105%
2. Stufe
   20 Hz - 60%
   50 Hz - 150%
   70 Hz - 210%.

Aus dem Blockschaltbild nach Fig. 3 ergibt sich, daß die Logik die Heizkurve und die Außentemperatur miteinander verknüpft und daraus den Sollwert für die Vorlauftemperatur der Heizung ermittelt. Das resultierende Signal wird einem Drehzahl-Steuergerät zugeführt, welches die Drehzahl der Wärmepumpe entsprechend einstellt. Der Regelkeis schließt sich durch Erfassung des Istwertes der Vorlauftemperatur und ggf. des Istwertes der Raumtemperatur.

Im Rahmen der Erfindung sind durchaus Abwandlungsmöglichkeiten gegeben. Vor allen Dingen ist das erfindungsgemäße Konzept anwendbar unabhängig davon, mit welchem Antrieb der Kompressor arbeitet. Auch sind neben Luft/Wasser-Wärmepumpen beliebige andere Kompressions-Wärmepumpen in dieser Weise betreibbar.

## Patentansprüche

1. Verfahren zum Betreiben einer Kompressions-Wärmepumpe für Heizzwecke, die einen Kompressor, einen Kondensator, eine Drossel und einen unter der Einwirkung der Außentemperatur arbeitenden Verdampfer umfaßt,
**dadurch gekennzeichnet**,
daß die Drehzahl des Kompressors in Abhängigkeit von der Außentemperatur derart gesteuert wird, daß die Heizleistung der Wärmepumpe im drehzahlgesteuerten Bereich mindestens näherungsweise dem von der Außentemperatur abhängigen Heiz-Wärmebedarf entspricht.

2. Verfahren nach Anspruch 1, dadurch gekennzeichnet,
daß die Heizkurve (Heiz-Wärmebedarf) erstellt wird, die Außen-und ggf. die Raumtemperatur erfaßt werden, aus der Außen- und ggf. der Raumtemperatur die benötigte Vorlauftemperatur der Heizung ermittelt wird und die ermittelte Vorlauftemperatur durch Drehzahlregelung des Kompressors eingestellt wird.

3. Verfahren nach Anspruch 1 oder 2, dadurch gekennzeichnet,
daß, bei Verwendung eines Asynchronmotors als Antrieb des Kompressors, die Drehzahl des Motors zwischen 20 und 70 Hz gesteuert wird.

4. Kompressions-Wärmepumpe für Heizzwecke, mit einem Kompressor, einem Kondensator, einer Drossel und einem Verdampfer, dadurch gekennzeichnet,
daß der Kompressor in seiner Drehzahl steuerbar ist.

5. Wärmepumpe nach Anspruch 4, dadurch gekennzeichnet,
daß der Kompressor überdimensioniert ist.

6. Wärmepumpe nach Anspruch 4 oder 5, dadurch gekennzeichnet,
daß, bei Verwendung eines Asynchronmotors als Antrieb des Kompressors, der Motor durch Polzu- bzw. -abschaltung von Polpaaren mehrstufig betreibbar und in jeder Stufe in seiner Drehzahl steuerbar ist.

7. Wärmepumpe nach einem der Ansprüche 4 bis 6, gekennzeichnet durch
ein Drehzahl-Steuergerät mit vorgeschalteter Logik, die an einen Vorlauf-Temperaturfühler und ggf. an einen Raum-Temperaturfühler angeschlossen ist sowie gespeichert die Heizkurve (Heiz-Wärmebedarf) enthält.
